# EUROPEAN PATENT SPECIFICATION

(11) **EP 2 432 852 B1**
(45) Date of publication and mention of the grant of the patent: **06.09.2017**
(21) Application number: 09844522.4
(22) Date of filing: 28.07.2009
(51) Int. Cl.: C10B 53/07, C10B 47/40, C10G 1/10

(54) **HEAT RECOVERY SYSTEM**
WÄRMERÜCKGEWINNUNGSSYSTEM
SYSTÈME DE RÉCUPÉRATION DE CHALEUR

(30) Priority: 12.05.2009 HK 09104351
(43) Date of publication of application: 28.03.2012
(73) Proprietor: Dongsung Ecore Co., Ltd., Saha-gu, Busan 105-1002 (KR)
(72) Inventor: PARK, Choong Yeul, Seoul 138-170 (KR); PARK, Hyun Joo, Busan 604-741 (KR)
(74) Representative: Ter Meer Steinmeister & Partner
(86) International application number: PCT/CN2009/072958
(87) International publication number: WO 2010/130110

(56) References cited:
- EP-B1- 1 504 077
- WO-A1-98/34996
- WO-A1-2007/142441
- WO-A1-2007/142441
- WO-A1-2007/145400
- WO-A2-2007/024687
- CN-A- 1 320 147
- DE-A1-102005 063 160
- KR-B1- 100 951 575
- US-A- 2 335 611
- US-A- 5 369 947
- US-B1- 7 101 463

## Description

### TECHNICAL FIELD

The present invention relates to a heat recovery system that can use as an energy source or reuse for other applications high-temperature gas used at the time of operating a moving disk type tube reactor and non-condensed oil vapor, oil, and carbon black produced by pyrolyzing waste tire chips

### BACKGROUND ART

With the deepening in lack of energy sources, studies for recovering energy from used products have been made. The most representative energy recoverable product is waste tires. When the waste tires are pyrolyzed, products of oil of 50 wt%, gas of 10 wt%, carbon of 30 wt%, and iron core of 10 wt% are generated, which have a great effective value as an energy source and a recycling resource

In general, energy recovery techniques using waste tires are classified into a dry distillation incinerating scheme and a pyrolysis scheme.

The dry distillation incinerating scheme has a problem that a mass process is difficult, the initial cost of equipment is great, and secondary pollutants are produced by the incineration.

In the pyrolysis scheme, it is ideal that the pyrolytic reaction temperature in a reactor is in the range of 380°C to 400°C but much time is taken to reach a proper reaction temperature at the time of pyrolyzing the waste tires in the reactor. Particularly, the temperature maintenance is not effective to deteriorate the quality of oil. In addition, when remainders produced in the course of pyrolysis are secured to inner walls of the reactor or a transfer mechanism to generate scales, the thermal conductivity of the reactor may be deteriorated, thereby causing a critical defect in operation of the transfer mechanism in the reactor

Conclusively, the development of a pyrolysis reactor that can maintain the optimal reaction temperature in the reactor and minimize the formation of scales of remainders is very important in pyrolytic oiling equipment using waste tires, but a pyrolysis reactor having solved the above-mentioned problems does not come to the market yet.

WO 2007/142441 A1 relates to a pyrolytic reactor apparatus of the waste tire. The pyrolytic reactor apparatus of the waste tire being such configured that; a left frame and a right frame can be installed respectively in both sides of a first horizontal tube having an inlet coupled thereto and a second horizontal tube having an outlet coupled thereto; a drive motor having a chain drive sprocket wheel coupled thereto is installed in the left frame; one side of a chain is connected to the chain drive sprocket wheel and the other side of the chain is connected to a chain driven sprocket wheel of a drive axle having the drive sprocket wheel coupled thereto; the driven sprocket wheel is coupled to the right frame, wherein a transfer conveyor is configured between the drive sprocket wheel and the driven sprocket wheel so that it can be circulated along the first horizontal tube and the second horizontal tube; the other sides facing the inlet of the first horizontal tube and the outlet of the second horizontal tube are connected respectively to a vertical tube; a gas outlet is coupled respectively to the first horizontal tube and the second horizontal tube; and a heating unit is installed to surround the first horizontal tube and the second horizontal tube.

### DISCLOSURE OF THE INVENTION

### Technical Goal

The invention is contrived to solve the above-mentioned problems. A technical goal of the invention is to provide a heat recovery system that can use as an energy source or reuse for other applications high-temperature gas used at the time of operating a moving disk type tube reactor and non-condensed oil vapor, oil and carbon black produced by pyrolyzing waste tire chips.

### Technical Solution

The objects are solved by the features of the independent claim. According to an aspect of the invention, there is provided a heat recovery system including: a moving disk type tube reactor, a heat recovering and steam generating unit recovering heat from high-temperature gas discharged from the moving disk type tube reactor and generating steam using the recovered thermal energy; a steam turbine being operated by the steam generated by the heat recovering and steam generating unit, and a generator connected to the steam turbine to generate electrical energy.

### Advantageous effect

The heat recovery system according to the invention can use as an energy source or reuse for other applications high-temperature gas used at the time of operating a moving disk type tube reactor and non-condensed oil vapor, oil, and carbon black produced by pyrolyzing waste tire chips

### BRIEF DESCRIPTION OF THE DRAWINGS

Fig. 1 is a front view illustrating a moving disk type tube reactor according to an embodiment of the invention.
Fig. 2 is a plan view of Fig. 1.
Fig. 3 shows sectional views taken along lines A-A and B-B' of Fig. 2.
Fig. 4 is a front view illustrating a moving disk type tube reactor according to another embodiment of the invention.
Fig. 5 is a sectional view taken along line C-C of Fig. 4
Fig. 6 is a diagram illustrating another example of a disk of the moving disk type tube reactor.
Fig. 7 is a block diagram illustrating a heat recovery system according to a first embodiment of the invention.
Fig 8 is a block diagram illustrating a heat recovery system according to a second embodiment of the invention.
Fig. 9 is a block diagram illustrating a heat recovery system according to a third embodiment of the invention.
Fig 10 is a block diagram illustrating a heat recovery system according to a fourth embodiment of the invention.

### BEST MODE FOR CARRYING OUT THE INVENTION

Embodiments of the invention will be described in detail with reference to the accompanying drawings.

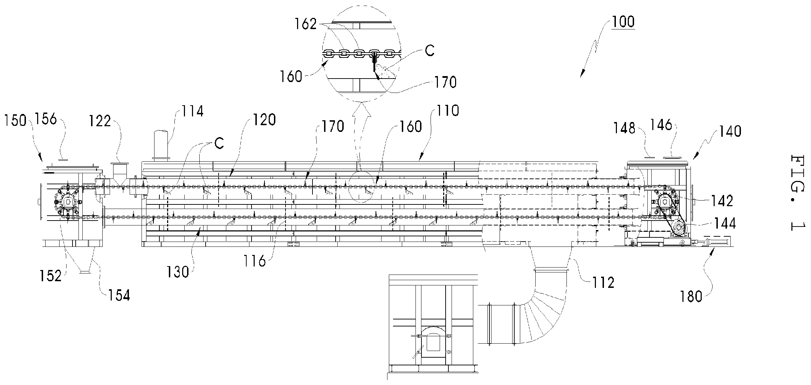

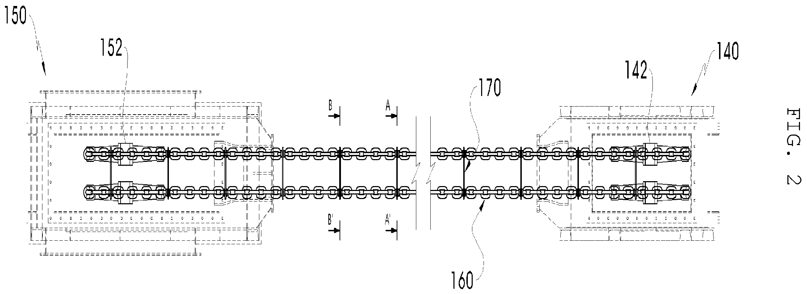

Fig. 1 is a front view illustrating a moving disk type tube reactor of a heat recovery system according to an embodiment of the invention. Fig. 2 is a plan view of Fig. 1.

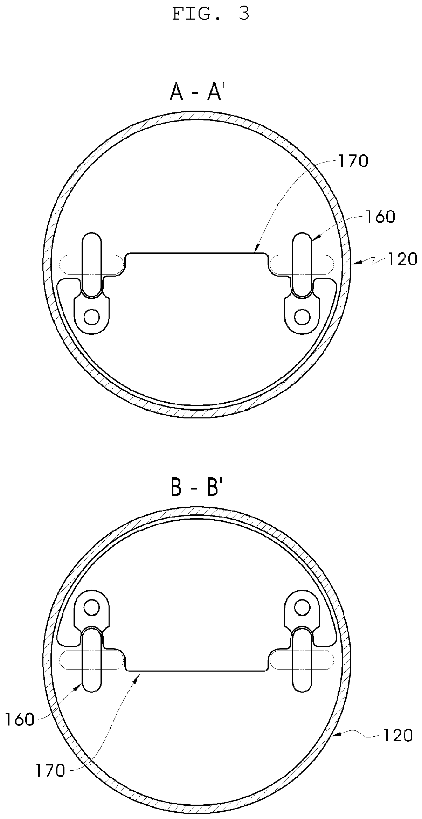

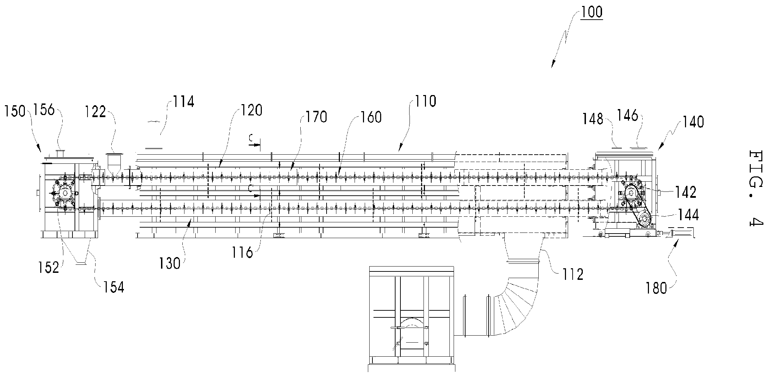

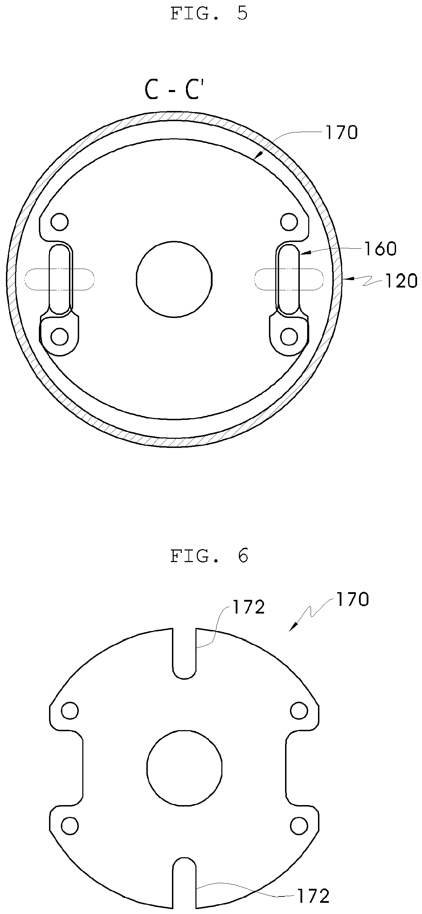

Fig. 3 shows sectional views taken along lines A-A' and B-B' of Fig. 2. Fig. 4 is a front view illustrating a moving disk type tube reactor according to another embodiment of the invention. Fig. 5 is a sectional view taken along line C-C' of Fig. 4. Fig. 6 is a diagram illustrating another example of a disk of the moving disk type tube reactor.

As shown in Figs. 1 to 3, a moving disk type tube reactor 100 according to an embodiment of the invention includes a heating tube 110, first and second transfer tubes 120 and 130 penetrating the heating tube 110, a driving part 140 and a driven part 150 disposed at both ends of the first and second transfer tubes 120 and 130, respectively, and a chain 160 and a disk 170 driven by the driving part 140 and the driven part 150 to circulate along the first and second transfer tubes 120 and 130.

The above-mentioned elements 110 to 170 will be described in more details.

First, the heating tube 110 has a rectangular shape of which the inside is closely enclosed and an inflow port 112 and an outflow port 114 for allowing high-temperature gas to flow in and out are formed at both ends thereof. Plural baffles 116 guiding the flow of gas (high-temperature gas) and adjusting a staying time thereof are disposed in the heating tube 110.

Here, as shown in Fig. 1, the plural baffles 116 are alternately disposed to be opposed to each other and allow the high-temperature gas flowing through the inflow port 112 to stay in the heating tube 110 for a long time. Accordingly, it is possible to heat the heating tube 110 for a short time and to uniformly heat the inside of the heating tube 110.

The first and second transfer tubes 120 and 130 have a cylindrical pipe shape of which both ends are opened so as to transfer waste tire chips C with the movement of the chain 160 and the disks 170. The first and second transfer tubes 120 and 130 are vertically separated from each other by a predetermined distance to be parallel to each other and an input port 122 for inputting the waste tire chips C is particularly formed at one end of the first transfer tube 120.

The driving part 140 serves to drive the chain 160 and the disks 170 and includes a driving sprocket 142 on which the chain 160 is wound and a driving motor 144 driving the driving sprocket 142. The driven part 150 serves to drive the chain 160 and the disk 170 in cooperation with the driving part 140 and includes a driven sprocket 152 on which the chain 160 is wound.

The driving part 140 is provided with a discharge port 146 for discharging oil vapor generated at the time of pyrolyzing the waste tire chips C and the driven part 150 is provided with a discharge port 154 for discharging pyrolyzed carbon black generated at the time of pyrolyzing the waste tire chips C. The driving part 140 and the driven part 150 are provided with safety valves 148 and 156 for preventing the inner pressure from increasing with gas generated at the time of pyrolyzing the waste tire chips C.

On the other hand, the driving part 140 is disposed movable and an actuator 180 is disposed on one side thereof so as to move the driving part 140 in the longitudinal direction of the first and second transfer tubes 120 and 130 depending on the internal temperature of the heating tube 110. This serves to prevent the chain 160 from departing from its path. Specifically, the chain 160 is prevented from departing from the driving and driven sprockets 142 and 152 due to its thermal expansion by the high-temperature gas supplied to the heating tube 110.

The chain 160 and the disks 170 are driven by the driving part 140 and the driven part 150 as described above and serves to circulate along the first and second transfer tubes 120 and 130 to transfer the waste tire chips C. The chain 160 is a known-shape chain in which plural rings 162 are longitudinally connected. The disks 170 are disposed at the same interval along the chain 160.

The disks 170 have a semi-circular shape as shown in Fig. 3, where a shape protruding upward from the chain 160 and a shape protruding downward from the chain 160 may be alternately arranged. In addition, as shown in Figs. 5 and 6, the disks 170 may have a circular shape including an elliptical shape and may be disposed at the same interval along the chain 160.

On the other hand, the outer diameter of the disks 170 having the above-mentioned shapes is smaller than the inner diameter of the first and second transfer tubes 120 and 130. That is, a predetermined gap is disposed between the disks 170 and the first and second transfer tubes 120 and 130. This serves to prevent the disks 170 from interfering with the first and second transfer tubes 120 and 130 due to its thermal expansion. Here, the gap can vary depending on the material of the disks 170 and is preferably in the range of about 1 to 2 mm.

In another method of preventing the disks 170 from interfering with the first and second transfer tubes 120 and 130 due to its thermal expansion, as shown in Fig. 6, a slit 172 having a predetermined width is formed in one or both of the upper and lower portions of the disks 170. Accordingly, when the disks 170 thermally expand, the width of the slit 172 decreases to prevent the interference with the first and second transfer tubes 120 and 130. Here, it is preferable that the width of the slit 172 is in the range of about 1 to 2 mm.

The pyrolysis of the waste tire chips C using the moving disk type tube reactor 100 having the above-mentioned configuration will be described now.

When the waste tire chips C are input through the input port 122 of the first transfer tube 120, the waste tire chips are transferred to the driving part 140 along the first transfer tube 120 by the chain 160 and the disks 170 driven by the driving part 140.

The transferred waste tire chips C are ejected into the driving part 140, are input to the second transfer tube 130 by the chain 160 and the disks 170 circulating, and are then transferred to the driven part 150 along the second transfer tube 130.

In the course of transferring the waste tire chips C along the first and second transfer tubes 120 and 130, high-temperature gas flows in the heating tube 110 and the heating tube 110 is heated indirectly by the high-temperature gas to pyrolyze the waste tire chips C. At this time, oil vapor and pyrolyzed carbon black are generated from the waste tire chips C, the generated oil vapor is discharged through the discharge port 146 of the driving part 140, and the pyrolyzed carbon black is discharged through the discharge port 154 of the driven part 150.

Conclusively, the moving disk type tube reactor 100 according to the invention can continuously pyrolyze the waste tire chips C by transferring the waste tire chips input to the first and second transfer tubes 120 and 130 using the chain 160 and the disks 170 and prevent remainders produced by pyrolysis from being accumulated in the first and second transfer tubes 120 and 130 (coking phenomenon).

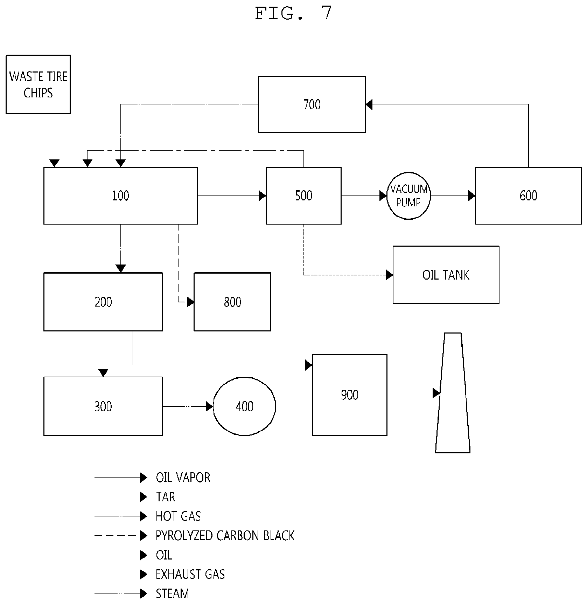

Fig. 7 is a block diagram illustrating a heat recovery system according to a first embodiment of the invention.

As shown in Fig. 7, the heat recovery system according to the first embodiment of the invention includes a moving disk type tube reactor 100 recovering oil and pyrolyzed carbon black using waste tire chips, a heat recovering and steam generating unit 200 recovering heat from high-temperature gas discharged from the moving disk type tube reactor 100 and generating steam using the recovered thermal energy, a steam turbine 300 operating with the steam generated by the heat recovering and steam generating unit 200, and a generator 400 connected to the steam turbine 300 to generate electrical energy.

The heat recovery system having the above-mentioned configuration supplies the high-temperature gas discharged from the moving disk type tube reactor 100 to the heat recovering and steam generating unit 200 to recover heat and generates the steam using the recovered thermal energy. Then, the heat recovery system generates electricity by allowing the steam turbine 300 to operate using the generated steam and driving the generator 400.

The heat recovery system further includes an oil recovering unit 500, an non-condensed oil vapor recovering unit 600, a hot gas generator (HGG) 700, a pyrolyzed carbon black recovering unit 800, and a wet scrubber 900. These constituent elements are also applied to known heat recovery systems and are thus mentioned in brief.

The oil recovering unit 500 serves to recover oil using the oil vapor generated by the moving disk type tube reactor 100 and includes a direct contact type quencher and an indirect contact type condenser.

The non-condensed oil vapor generated by the oil recovering unit 500 is recovered by the non-condensed oil vapor recovering unit 600. The recovered non-condensed oil vapor is supplied to the hot gas generator (HGG) 700 to generate hot gas and the generated high-temperature gas is supplied to the moving disk type tube reactor 100.

The pyrolyzed carbon black recovering unit 800 recovers the pyrolyzed carbon black generated by the moving disk type tube reactor 100. The wet scrubber 900 filters exhaust gas generated from the heat recovering and steam generating unit 200 and discharges the filtered exhaust gas to the outside.

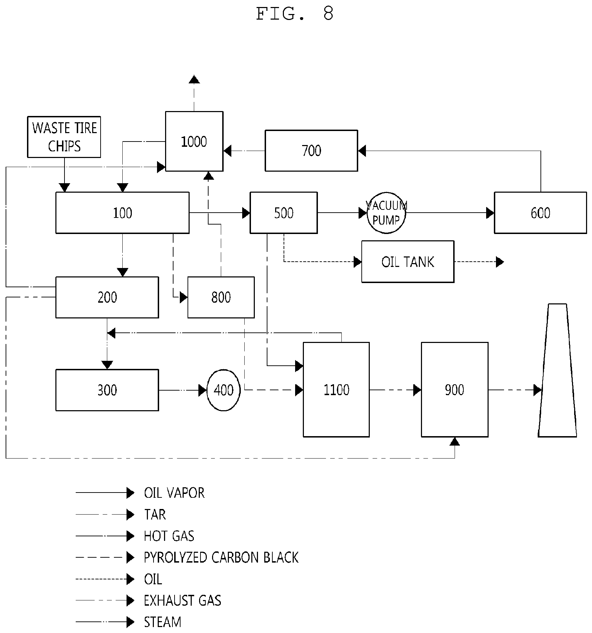

Fig. 8 is a block diagram illustrating a heat recovery system according to a second embodiment of the invention. In describing the heat recovery system according to the second embodiment of the invention with reference to Fig. 8, the same constituent elements as described in the first embodiment will not be described.

The heat recovery system according to the second embodiment of the invention includes a moving disk type tube reactor 100, a heat recovering and steam generating unit 200, a steam turbine 300, a generator 400, an oil recovering unit 500, a non-condensed oil vapor recovering unit 600, a hot gas generator (HGG) 700, a carbon black recovering unit 800, a wet scrubber 900, an activation furnace 1000, and a fluidized-bed boiler 1100.

The activation furnace 1000 serves to refine some of the pyrolyzed carbon black recovered by the carbon black recovering unit 800 into activated carbon using the hot gas generated by the hot gas generator (HGG) 700. The fluidized-bed boiler 1100 serves to generate steam using the other of the pyrolyzed carbon black recovered by the carbon black recovering unit 800 and tar generated by the oil recovering unit 500 and to supply the generated steam to the steam turbine 300.

The heat recovery system having the above-mentioned configuration refines some of the pyrolyzed carbon black recovered by the carbon black recovering unit 800 into the activated carbon using the hot gas generated by the hot gas generator (HGG) 700. The refinement of the activated carbon can be performed by heating the pyrolyzed carbon black to about 1,000°C in the activation furnace 1000.

The hot gas (about 900°C) used in refining the pyrolyzed carbon black into activated carbon is supplied to the moving disk type tube reactor 100 to heat the moving disk type tube reactor 100 and then is supplied to the heat recovering and steam generating unit 200. The heat recovering and steam generating unit 200 recovers heat from the hot gas (about 600 °C), generates steam using the recovered thermal energy, and generates electricity by activating the steam turbine 300 and the generator 400 using the generated steam.

On the other hand, the other of the pyrolyzed carbon black not refined into activated carbon is used as a fuel of the fluidized-bed boiler 1100. The fluidized-bed boiler 1100 generates the steam using tar generated from the oil recovering unit 500 as the fuel in addition to the pyrolyzed carbon black and supplies the generated steam to the steam turbine 300.

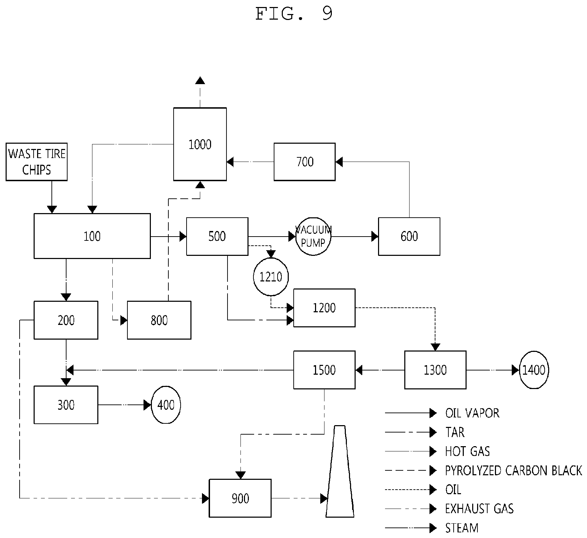

Fig. 9 is a block diagram illustrating a heat recovery system according to a third embodiment of the invention. In describing the heat recovery system according to the third embodiment of the invention with reference to Fig. 9, the same constituent elements as described in the first and second embodiments will not be described.

The heat recovery system according to the third embodiment of the invention includes a moving disk type tube reactor 100, a first heat recovering and steam generating unit 200, a steam turbine 300, a generator 400, an oil recovering unit 500, a non-condensed oil vapor recovering unit 600, a hot gas generator (HGG) 700, a carbon black recovering unit 800, a wet scrubber 900, an activation furnace 1000, a gas generating unit 1200, a gas turbine 1300, a generator 1400, and a second heat recovering and steam generating unit 1500.

The gas generating unit 1200 serves to generate synthetic gas using the oil recovered by the oil recovering unit 500. The gas turbine 1300 operates with the synthetic gas generated by the gas generating unit 1200. The generator 1400 is connected to the gas turbine 1300 to generate electrical energy. The second heat recovering and steam generating unit 1500 serves to recover heat from the exhaust gas generated from the gas turbine 1300 and to generate steam using the recovered thermal energy.

The heat recovery system having the above-mentioned configuration generates the synthetic gas using the oil recovered by the oil recovering unit 500. The generation of the synthetic gas can be performed in the gas generating unit 1200 by allowing a booster pump 1210 to compress the gas with a high pressure. The gas turbine 1300 and the generator 1400 are driven using the generated synthetic gas to generate electricity.

On the other hand, the exhaust gas generated from the gas turbine 1300 is supplied to the second heat recovering and steam generating unit 1500. The second heat recovering and steam generating unit 1500 recovers the heat from the exhaust gas and generates steam using the recovered thermal energy. The steam turbine 300 and the generator 400 are activated to generate electricity.

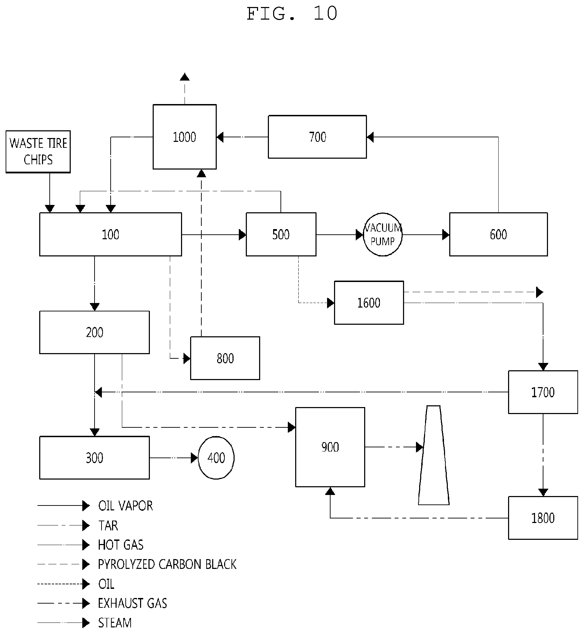

Fig. 10 is a block diagram illustrating a heat recovery system according to a fourth embodiment of the invention. In describing the heat recovery system according to the fourth embodiment of the invention with reference to Fig. 10, the same constituent elements as described in the first to third embodiments will not be described.

The heat recovery system according to the fourth embodiment of the invention includes a moving disk type tube reactor 100, a first heat recovering and steam generating unit 200, a steam turbine 300, a generator 400, an oil recovering unit 500, a non-condensed oil vapor recovering unit 600, a hot gas generator (HGG) 700, a carbon black recovering unit 800, a wet scrubber 900, an activation furnace 1000, a heating furnace 1600, a third heat recovering and steam generating unit 1700, and a filter 1800.

The heating furnace 1600 serves to heat the oil recovered by the oil recovering unit 500 and to generate the pyrolyzed carbon black. The third heat recovering and steam generating unit 1700 serves to recover heat from the high-temperature gas used in generating the pyrolyzed carbon black in the heating furnace 1600 and to generate steam using the recovered thermal energy. The filter 1800 serves to filter exhaust gas generated from the third heat recovering and steam generating unit 1700.

The heat recovery system having the above-mentioned configuration heats the oil recovered by the oil recovering unit 500 to generate the pyrolyzed carbon black by the use of the heating furnace 1600, recovers heat from the high-temperature gas used in generating the pyrolyzed carbon black in the heating furnace 1600 by the use of the third heat recovering and steam generating unit 1700, and generates the steam using the recovered thermal energy. The steam turbine 300 and the generator 400 are driven by the generated steam to generate electricity.

Although the heat recovery system according to the exemplary embodiments of the invention has been described with the accompanying drawings, it is only an example. It will be understood well by technician in this area that the invention can be modified in various forms based on this invention.

## Claims

1. A heat recovery system comprising:
a moving disk type tube reactor (100) comprising:
a heating tube (110) in which an inflow port (112) and an outflow port (114) for allowing high-temperature gas to flow in and out are formed at both ends thereof, respectively;
a first transfer tube (120) penetrating the heating tube (110) and having an input port (122) for inputting waste tire chips at one end thereof;
a second transfer tube (130) disposed parallel to the first transfer tube (120);
a driving part (140) disposed at the other end of the first and second transfer tubes (120, 130), having a driving sprocket (142) and a driving motor (144) for driving the driving sprocket (142) therein, and having a discharge port (146) discharging oil vapor formed therein;
a driven part (150) disposed at one end of the first and second transfer tube (120, 130), having a driven sprocket (152) formed therein, and having a discharge port (154) discharging pyrolyzed carbon black to the outside;
a chain (160) disposed to penetrate the first and second transfer tube (120, 130) and wound on the driving and driven sprockets (142, 152) to circulate; and
a plurality of disks (170) disposed along the chain (160);
**characterized by** the heat recovery system comprising further:
a heat recovering and steam generating unit (200) recovering heat from high-temperature gas discharged from the moving disk type tube reactor (100) and generating steam using the recovered thermal energy;
a steam turbine (300) being operated by the steam generated by the heat recovering and steam generating unit (200); and
a generator (400) connected to the steam turbine (300) to generate electrical energy,
wherein the driving part (140) of the moving disk type tube reactor (100) is disposed to be movable in the longitudinal direction of the first and second transfer tubes (120, 130).

2. The heat recovery system according to claim 1, further comprising:
an oil recovering unit (500) recovering oil by the use of oil vapor generated by the moving disk type tube reactor (100);
a non-condensed oil vapor recovering unit (600) recovering non-condensed oil vapor generated by the oil recovering unit (500);
a hot gas generator (700) generating hot gas using the non-condensed oil vapor recovered by the non-condensed oil vapor recovering unit (600) and supplying the generated hot gas to the moving disk type tube reactor (100); and
a pyrolyzed carbon black recovering unit (800) recovering pyrolyzed carbon black generated by the moving disk type tube reactor (100).

3. The heat recovery system according to claim 2, further comprising a wet scrubber (900) filtering exhaust gas generated from the heat recovering and steam generating unit (200) and discharging the filtered exhaust gas to the outside.

4. The heat recovery system according to claim 3, further comprising:
an activation furnace (1000) refining a part of the pyrolyzed carbon black recovered by the carbon black recovering unit (800) into activated carbon using the hot gas generated by the hot gas generator (700); and
a flowing layer boiler (1100) generating steam using the other of the pyrolyzed carbon black recovered by the carbon black recovering unit (800) and tar generated by the oil recovering unit (500) and supplying the generated steam to the steam turbine (300).

5. The heat recovery system according to claim 3, further comprising:
an activation furnace (1000) refining the pyrolyzed carbon black recovered by the carbon black recovering unit (800) into activated carbon using the hot gas generated by the hot gas generator (700);
a gas generating unit (1200) generating synthesized gas using the oil recovered by the oil recovering unit (500);
a gas turbine (1300) being operated by the synthesized gas generated by the gas generating unit (1200); and
a generator (1400) connected to the gas turbine (1300) to generate electrical energy.

6. The heat recovery system according to claim 5, further comprising a second heat recovering and steam generating unit (1500) recovering heat from the exhaust gas generated after the gas turbine (1300) is operated and generating steam using the recovered thermal energy.

7. The heat recovery system according to claim 3, further comprising:
an activation furnace (1000) refining the pyrolyzed carbon black recovered by the carbon black recovering unit (800) into activated carbon using the hot gas generated by the hot gas generator (700);
a heating furnace (1600) heating the oil recovered by the oil recovering unit (500) to generate the pyrolyzed carbon black;
a third heat recovering and steam generating unit (1700) recovering heat from the high-temperature gas used at the time of allowing the heating furnace (1600) to generate the pyrolyzed carbon black and generating steam using the recovered thermal energy; and
a filter (1800) filtering the exhaust gas generated by the third heat recovering and steam generating unit (1700).

8. The heat recovery system according to claim 7, wherein the oil recovering unit (500) includes a direct-contact type quencher and an indirect-contact type condenser.

9. The moving disk type tube reactor according to claim 1, further comprising an actuator (180) allowing the driving part (140) to move in the longitudinal direction of the first and second transfer tubes (120, 130) depending on the inner temperature of the heating tube (110).

10. The moving disk type tube reactor according to claim 9, wherein the plurality of disks (170) have a semi-circular shape and a shape protruding upward from the chain (160) and a shape protruding downward from the chain (160) alternately.

11. The moving disk type tube reactor according to claim 9, wherein the plurality of disks (170) have a circular shape including an elliptical shape.

12. The moving disk type tube reactor according to claim 9, wherein a gap is disposed between the outer circumferences of the disks (170) and the inner circumferences of the first and second transfer tubes (120, 130).

13. The moving disk type tube reactor according to claim 9, wherein at least one slit (172) is formed in the circumferences of the disks (170).

14. The moving disk type tube reactor according to claim 9, wherein a plurality of baffles (116) are disposed in the heating tube (110) and the plurality of baffles (116) are alternately disposed to be opposed to each other.

15. The moving disk type tube reactor according to claim 9, wherein a safety valve (148, 156) that is automatically opened and closed depending on the inner pressure is disposed in at least one of the driving part (140) and the driven part (150).

## Patentansprüche

1. Wärmerückgewinnungssystem, umfassend:
einen Rohrreaktor des Typs mit sich bewegender Scheibe (100), umfassend:
ein Heizrohr (110), in dem ein Einflussport (112) und ein Ausflussport (114) jeweils an beiden Enden gebildet sind, um es Hochtemperaturgas zu erlauben, hinein- und herauszufließen;
ein erstes Transferrohr (120), das in das Heizrohr (110) eindringt und einen Eingangsport (122) zum Eingeben von Altreifenchips an einem Ende hat;
ein zweites Transferrohr (130), das parallel zu dem ersten Transferrohr (120) angeordnet ist;
ein Antriebsteil (140), das an dem anderen Ende des ersten und zweiten Transferrohrs (120, 130) angeordnet ist, das ein Antriebsritzel (142) und einen Antriebsmotor (144) zum Antreiben des Antriebsritzels (142) darin hat, und einen Auslassport (146), der Öldampf, der darin gebildet wird, auslässt;
ein Abtriebsteil (150), das an einem Ende des ersten und zweiten Transferrohrs (120, 130) angeordnet ist, das ein angetriebenes Ritzel (152), das darin gebildet ist, und einen Auslassport (154) zum Auslassen von pyrolysiertem Ruß nach außen hat;
eine Kette (160), die angeordnet ist, um in das erste und das zweite Transferrohr (120, 130) einzudringen, und die um das Antriebsritzel und das Abtriebsritzel (142, 152) gewunden ist, um zu zirkulieren, und
eine Vielzahl von Scheiben (170), die entlang der Kette (160) angeordnet ist;
**dadurch gekennzeichnet, dass** das Wärmerückgewinnungssystem ferner umfasst:
eine Wärmerückgewinnungs- und Dampferzeugungseinheit (200), die Wärme von Hochtemperaturgas, das aus dem Rohrreaktor des Typs mit sich bewegender Scheibe (100) ausgelassen wird, und Dampf unter Verwenden der zurückgewonnenen Wärmeenergie erzeugt;
eine Dampfturbine (300), die von dem Dampf betrieben wird, der von der Wärmerückgewinnungs- und Dampferzeugungseinheit (200) erzeugt wird, und
einen Generator (400), der an die Dampfturbine (300) angeschlossen ist, um elektrische Energie zu erzeugen;
wobei der Antriebsteil (140) des Rohrreaktors des Typs mit sich bewegender Scheibe (100) angeordnet ist, um in die Längsrichtung des ersten und zweiten Transferrohrs (120, 130) bewegbar zu sein.

2. Wärmerückgewinnungssystem nach Anspruch 1, ferner umfassend:
eine Ölrückgewinnungseinheit (500), die Öl durch den Gebrauch von Öldampf, der von dem Rohrreaktor des Typs mit sich bewegender Scheibe (100) erzeugt wird, zurückgewinnt,
eine Rückgewinnungseinheit (600) für nicht kondensierten Öldampf, die nicht kondensierten Öldampf, der von der Ölrückgewinnungseinheit (500) erzeugt wird, zurückgewinnt;
einen Heißgasgenerator (700), der heißes Gas unter Verwenden des nicht kondensierten Öldampfs, der durch die Rückgewinnungseinheit (600) nicht kondensierten Öldampfs zurückgewonnen wird, erzeugt, und das erzeugte heiße Gas zu dem Rohrreaktor des Typs mit sich bewegender Scheibe (100) liefert, und
eine Rückgewinnungseinheit (800) für pyrolisierten Ruß, die pyrolysierten Ruß, der von dem Rohrreaktor des Typs mit sich bewegender Scheibe (100) erzeugt wird, zurückgewinnt.

3. Wärmerückgewinnungssystem nach Anspruch 2, das ferner einen Nasswäscher (900) umfasst, der Abgas, das von der Wärmerückgewinnungs- und Dampferzeugungseinheit (200) erzeugt wird, filtert und das gefilterte Abgas nach außen auslässt.

4. Wärmerückgewinnungssystem nach Anspruch 3, ferner umfassend:
einen Aktivierungsofen (1000), der einen Teil des pyrolisierten Rußes, der durch die Rückgewinnungseinheit (800) für Ruß zurückgewonnen wird, in Aktivkohle unter Verwenden der heißen Gase, die von dem Heißgasgenerator (700) erzeugt werden, raffiniert; und
einen Strömungsschichtkessel (1100), der Dampf unter Verwenden des anderen des pyrolisierten Rußes, der von der Rückgewinnungseinheit (800) für Ruß zurückgewonnen wird, erzeugt, und Teer, der durch die Ölrückgewinnungseinheit (500) erzeugt wird, und den erzeugten Dampf zu der Dampfturbine (300) liefert.

5. Wärmerückgewinnungssystem nach Anspruch 3, ferner umfassend:
einen Aktivierungsofen (1000), der den pyrolisierten Ruß, der von der Rückgewinnungseinheit (800) für Ruß zurückgewonnen wird, in Aktivkohle unter Verwenden des heißen Gases, das von dem Heißgasgenerator (700) erzeugt wird, raffiniert;
eine Gaserzeugungseinheit (1200), die synthetisiertes Gas unter Verwenden des Öls, das von der Rückgewinnungseinheit (500) zurückgewonnen wird, erzeugt;
eine Gasturbine (1300), die von dem synthetisierten Gas, das von der Gaserzeugungseinheit (1200) erzeugt wird, betrieben wird, und
einen Generator (1400), der an die Gasturbine (1300) angeschlossen ist, um elektrische Energie zu erzeugen.

6. Wärmerückgewinnungssystem nach Anspruch 5, das ferner eine zweite Wärmerückgewinnungs- und Wärmeerzeugungseinheit (1500) umfasst, die Wärme aus dem Abgas zurückgewinnt, das erzeugt wird, nachdem die Gasturbine (1300) betrieben wird, und Dampf unter Verwenden der zurückgewonnenen Wärmeenergie erzeugt.

7. Wärmerückgewinnungssystem nach Anspruch 3, ferner umfassend:
einen Aktivierungsofen (1000), der pyrolisierten Ruß, der von der Rückgewinnungseinheit (800) zurückgewonnen wird, in Aktivkohle unter Verwenden des heißen Gases, das von dem Heißgasgenerator (700) erzeugt wird, raffiniert;
einen Heizofen (1600), der das Öl, das von der Rückgewinnungseinheit (500) zurückgewonnen wird, erhitzt, um den pyrolisierten Ruß zu erzeugen;
eine dritte Wärmerückgewinnungs- und Dampferzeugungseinheit (1700), die Wärme aus dem Hochtemperaturgas zurückgewinnt, das in dem Zeitpunkt, in dem es dem Heizofen (1600) erlaubt wird, den pyrolisierten Ruß zu erzeugen, verwendet wird, und Dampf unter Verwenden der zurückgewonnenen Wärmeenergie erzeugt, und
ein Filter (1800), das das Abgas, das von der dritten Wärmerückgewinnungs-und Dampferzeugungseinheit (1700) zurückgewonnen wird, filtert.

8. Wärmerückgewinnungssystem nach Anspruch 7, wobei die Ölrückgewinnungseinheit (500) einen Löscher des Typs mit direktem Kontakt und einen Kondensator des Typs mit indirektem Kontakt aufweist.

9. Rohrreaktor des Typs mit sich bewegender Scheibe nach Anspruch 1, der ferner einen Aktuator (180) umfasst, der es dem Antriebsteil (140) erlaubt, sich in die Längsrichtung des ersten und zweiten Transferrohrs (120, 130) in Abhängigkeit von der Innentemperatur des Heizrohrs (110) zu bewegen.

10. Rohrreaktor des Typs mit sich bewegender Scheibe, wobei die Vielzahl von Scheiben (170) eine Halbkreisform und eine Form, die abwechselnd von der Kette (160) aufwärts vorsteht, und eine Form, die von der Kette (160) abwärts vorsteht, hat.

11. Rohrreaktor des Typs mit sich bewegender Scheibe nach Anspruch 9, wobei die Vielzahl von Scheiben (170) eine Kreisform hat, darunter eine elliptische Form.

12. Rohrreaktor des Typs mit sich bewegender Scheibe nach Anspruch 9, wobei eine Spalte zwischen dem Außenumfang der Scheiben (170) und den Innenumfängen des ersten und zweiten Transferrohrs (120, 130) angeordnet ist.

13. Rohrreaktor des Typs mit sich bewegender Scheibe nach Anspruch 9, wobei mindestens ein Schlitz (172) in den Umfängen der Scheiben (170) gebildet ist.

14. Rohrreaktor des Typs mit sich bewegender Scheibe nach Anspruch 9, wobei eine Vielzahl von Dampfsperren (116) in dem Heizrohr (110) angeordnet ist, und die Vielzahl von Dampfsperren (116) abwechselnd einander gegenüber angeordnet ist.

15. Rohrreaktor des Typs mit sich bewegender Scheibe nach Anspruch 9, wobei ein Sicherheitsventil (148, 156), das in Abhängigkeit von dem Innendruck automatisch geöffnet und geschlossen wird, in dem Antriebsteil (140) und/oder dem Abtriebsteil (150) angeordnet ist.

## Revendications

1. Système de récupération de chaleur comprenant :
un réacteur à tubes du type à disque en mouvement (100) comprenant :
un tube chauffant (110) dans lequel un orifice d'entrée (112) et un orifice de sortie (114) pour permettre l'écoulement entrant et l'écoulement sortant d'un gaz à haute température sont formés aux deux extrémités de celui-ci, respectivement ;
un premier tube de transfert (120) qui pénètre dans le tube chauffant (110) et ayant un orifice d'entrée (122) pour faire entrer des copeaux de pneumatiques de rebut à l'une de ses extrémités ;
un second tube de transfert (130) disposé parallèlement au premier tube de transfert (120) ;
une partie menante (140) disposée à l'autre extrémité du premier et du second tube de transfert (120, 130), ayant une roue dentée d'entraînement (142) et un moteur d'entraînement (144) pour entraîner la roue dentée d'entraînement (142) à l'intérieur, et ayant un orifice de décharge (146) pour décharger la vapeur d'huile formée à l'intérieur ;
une partie menée (150) disposée à une extrémité du premier et du second tube de transfert (120, 130), ayant une roue dentée entraînée (152) formée à l'intérieur, et ayant un orifice de décharge (154) pour décharger le noir de carbone pyrolysé vers l'extérieur ;
une chaîne (160) disposée pour pénétrer dans le premier et le second tube de transfert (120, 130) et enroulée sur la roue dentée d'entraînement et la roue dentée entraînée (142, 152) pour circuler ; et
une pluralité de disques (170) disposés le long de la chaîne (160) ;
**caractérisé en ce que** le système de récupération de chaleur comprend en outre :
une unité de récupération de chaleur et de génération de vapeur (200) qui récupère de la chaleur depuis le gaz à haute température déchargé depuis le réacteur à tubes du type à disque en mouvement (100) et qui génère de la vapeur en utilisant l'énergie thermique récupérée ;
une turbine à vapeur (300) qui est amenée à fonctionner par la vapeur générée par l'unité de récupération de chaleur et de génération de vapeur (200) ; et
un générateur (400) connecté à la turbine à vapeur (300) pour générer de l'énergie électrique,
dans lequel la partie menante (140) du réacteur à tubes du type à disque en mouvement (100) est disposée pour être déplaçable dans la direction longitudinale du premier et du second tube de transfert (120, 130).

2. Système de récupération de chaleur selon la revendication 1, comprenant en outre :
une unité de récupération d'huile (500) qui récupère de l'huile en utilisant la vapeur d'huile générée par le réacteur à tubes du type à disque en mouvement (100) ;
une unité de récupération de vapeur d'huile non condensée (600) qui récupère la vapeur d'huile non condensée générée par l'unité de récupération d'huile (500) ;
un générateur de gaz chaud (700) qui génère des gaz chauds en utilisant la vapeur d'huile non condensée récupérée par l'unité de récupération de vapeur d'huile non condensée (600), et qui alimente les gaz chauds générés au réacteur à tubes du type à disque en mouvement (100) ; et
une unité de récupération de noir de carbone pyrolyse (800) qui récupère le noir de carbone pyrolysé généré par le réacteur à tubes du type à disque en mouvement (100).

3. Système de récupération de chaleur selon la revendication 2, comprenant en outre un séparateur humide (900) qui filtre les gaz d'échappement générés depuis l'unité de récupération de chaleur et de génération de vapeur (200) et qui décharge les gaz d'échappement filtrés vers l'extérieur.

4. Système de récupération de chaleur selon la revendication 3, comprenant en outre :
un four d'activation (1000) qui raffine une partie du noir de carbone pyrolysé récupéré par l'unité de récupération de noir de carbone (800) pour donner du charbon actif en utilisant les gaz chauds générés par le générateur de gaz chaud (700) ; et
une chaudière à couche en écoulement (1100) qui génère de la vapeur en utilisant le reste du noir de carbone pyrolysé récupéré par l'unité de récupération de noir de carbone (800) et les goudrons générés par l'unité de récupération d'huile (500), et qui alimente la vapeur générée à la turbine à vapeur (300).

5. Système de récupération de chaleur selon la revendication 3, comprenant en outre :
un four d'activation (1000) qui raffine le noir de carbone pyrolysé récupéré par l'unité de récupération de noir de carbone (800) en donnant du charbon actif en utilisant les gaz chauds générés par le générateur de gaz chaud (700) ;
une unité de génération de gaz (1200) qui génère un gaz synthétisé en utilisant l'huile récupérée par l'unité de récupération d'huile (500) ;
une turbine à gaz (1300) qui est amené à fonctionner par les gaz synthétisés générés par l'unité de génération de gaz (1200) ; et
un générateur (1400) connecté à la turbine à gaz (1300) pour générer de l'énergie électrique.

6. Système de récupération de chaleur selon la revendication 5, comprenant en outre une seconde unité de récupération de chaleur et de génération de vapeur (1500) qui récupère de la chaleur depuis les gaz d'échappement générés après le fonctionnement de la turbine à gaz (1300), et qui génère de la vapeur en utilisant l'énergie thermique récupérée.

7. Système de récupération de chaleur selon la revendication 3, comprenant en outre :
un four d'activation (1000) qui raffine le noir de carbone pyrolyse et récupéré par l'unité de récupération de noir de carbone (800) pour donner du charbon actif en utilisant les gaz chauds générés par le générateur de gaz chaud (700) ;
un four de chauffage (1600) qui chauffe l'huile récupérée par l'unité de récupération d'huile (500) afin de générer le noir de carbone pyrolysé ;
une troisième unité de récupération de chaleur et de génération de vapeur (1700) qui récupère la chaleur depuis les gaz à haute température utilisés au moment où l'on permet au four de chauffage (1600) de générer le noir de carbone pyrolysé et qui génère de la vapeur en utilisant l'énergie thermique récupérée ; et
un filtre (1800) qui filtre les gaz d'échappement générés par la troisième unité de récupération de chaleur et de génération de vapeur (1700).

8. Système de récupération de chaleur selon la revendication 7, dans lequel l'unité de récupération d'huile (500) inclut un inhibiteur du type à contact direct et un condenseur du type à contact indirect.

9. Réacteur à tubes du type à disque en mouvement selon la revendication 1, comprenant en outre un actionneur (180) qui permet à la partie menante (140) de se déplacer dans la direction longitudinale du premier et du second tube de transfert (120, 130) en dépendance de la température intérieure du tube chauffant (110).

10. Réacteur à tubes du type à disque en mouvement selon la revendication 9, dans lequel la pluralité de disques (170) ont une forme semi-circulaire et une forme qui se projette vers le haut depuis la chaîne (160) et une forme qui se projette vers le bas depuis la chaîne (160) en alternance.

11. Réacteur à tubes du type à disque en mouvement selon la revendication 9, dans lequel la pluralité de disques (170) ont une forme circulaire incluant une forme elliptique.

12. Réacteur à tubes du type à disque en mouvement selon la revendication 9, dans lequel un intervalle est disposé entre les circonférences extérieures des disques (170) et les circonférences intérieures du premier et du second tube de transfert (120, 130).

13. Réacteur à tubes du type à disque en mouvement selon la revendication 9, dans lequel au moins une fente (172) est formée dans la circonférence des disques (170).

14. Réacteur à tubes du type à disque en mouvement selon la revendication 9, dans lequel une pluralité d'écrans (116) sont disposés dans le tube chauffant (110), et la pluralité d'écrans (116) sont disposés alternativement de manière à être opposés les uns aux autres.

15. Réacteur à tubes du type à disque en mouvement selon la revendication 9, dans lequel une valve de sécurité (148, 156) qui est automatiquement ouverte et fermée en fonction de la pression intérieure est disposée dans l'un au moins parmi la partie menante (140) et la partie menée (150).
